# EUROPÄISCHE PATENTSCHRIFT

(11) **EP 0 943 061 B1**
(45) Veröffentlichungstag und Bekanntmachung des Hinweises auf die Patenterteilung: **17.03.2004**
(21) Anmeldenummer: 97954352.7
(22) Anmeldetag: 03.12.1997
(51) Int. Cl.: F16D 65/16, B60T 1/06

(54) **ELEKTROMECHANISCH BETÄTIGBARE SCHEIBENBREMSE**
DISC BRAKE WHICH CAN BE ACTUATED ELECTROMECHANICALLY
FREIN A DISQUE A COMMANDE ELECTROMECANIQUE

(30) Priorität: 16.12.1996 DE 19652230
(43) Veröffentlichungstag der Anmeldung: 22.09.1999
(73) Patentinhaber: Continental Teves AG & Co. oHG, 60488 Frankfurt (DE)
(72) Erfinder: SCHWARZ, Ralf, D-64297 Darmstadt (DE); KILIAN, Peter, D-64297 Darmstadt (DE); SEMSCH, Martin, D-35510 Butzbach (DE); KRANLICH, Holger, D-61184 Karben (DE); SCHMITT, Stefan, D-65343 Eltville (DE)
(74) Vertreter: Dusil, Vladimir, Dipl.-Ing.
(86) Internationale Anmeldenummer: PCT/EP1997/006761
(87) Internationale Veröffentlichungsnummer: WO 1998/027357

(56) Entgegenhaltungen:
- EP-A- 0 295 770
- EP-A- 0 743 470
- EP-B- 0 394 238
- PATENT ABSTRACTS OF JAPAN vol. 013, no. 033 (M-789), 25.Januar 1989 & JP 63 242764 A (AISIN SEIKI CO LTD), 7.Oktober 1988,

## Beschreibung

Die Erfindung betrifft eine elektromechanisch betätigbare Scheibenbremse für Kraftfahrzeuge mit einem Bremssattel, sowie einer am Bremssattel angeordneten Betätigungseinheit, mit zwei mit je einer Seitenfläche einer Bremsscheibe zusammenwirkenden, im Bremssattel begrenzt verschiebbar angeordneten Reibbelägen, wobei einer der Reibbeläge mittels eines Betätigungselementes durch die Betätigungseinheit direkt und der andere Reibbelag durch die Wirkung einer vom Bremssattel aufgebrachten Reaktionskraft mit der Bremsscheibe in Eingriff bringbar ist, und wobei die Betätigungseinheit einen koaxial zum Betätigungselement angeordneten Elektromotor sowie ein wirkungsmäßig zwischen ihm und dem Betätigungselement angeordnetes Untersetzungsgetriebe aufweist.

Eine derartige elektromechanisch betätigbare Scheibenbremse ist z.B. aus der EP-0 394 238 B1 bekannt. Die Betätigungseinheit der bekannten Scheibenbremse besteht aus einem Elektromotor, der mit einem Planetengetriebe zusammenwirkt, dessen Planetenräder ein Ringrad antreiben, dessen Drehbewegung über Lagermittel auf eine Betätigungshülse übertragen wird bzw. deren Axialverschiebung bewirkt, durch die der der Betätigungseinheit zugeordnete Reibbelag in Eingriff mit der Bremsscheibe gebracht wird. Der Elektromotor und das Planetengetriebe sind dabei in der Betätigungsrichtung der Scheibenbremse nebeneinander angeordnet. Als nachteilig wird bei der bekannten elektromechanisch betätigbaren Scheibenbremse insbesondere empfunden, daß bei der Ausrüstung eines Kraftfahrzeuges, bei der mindestens zwei derartige Bremsen in einem Regelkreis integriert sind, der Regelgröße "dem Elektromotor zugeführter elektrischer Strom" kein eindeutiger Wert der auf die Beläge einwirkenden Spannkraft zugeordnet werden kann. Daraus ergeben sich, aufgrund des streuenden mechanischen Wirkungsgrades, ungleichmäßige Bremsmomente auf den Fahrzeugachsen.

Es ist daher Aufgabe der vorliegenden Erfindung, eine elektromechanisch betätigbare Scheibenbremse der eingangs genannten Gattung dahingehend zu verbessern, daß bei ihrer Verwendung in einem Regelkreis eine eindeutige Zuordnung zwischen der Spannkraft und dem dem Elektromotor zugeführten elektrischen Strom erreicht wird.

Diese Aufgabe wird erfindungsgemäß durch die Merkmale des kennzeichnenden Teils von Anspruch 1 gelöst. Durch diese Maßnahmen wird eine radindividuelle Regelung der benötigten Bremskraft ermöglicht.

Bei vorteilhaften Ausführungen des Erfindungsgegenstandes ist die Kraftmeßeinrichtung im Sattel oder in einem Lager angeordnet, in dem das Untersetzungsgetriebe gelagert ist und das die von der Betätigungseinheit aufgebrachte Spannkraft aufnimmt. Eine weitere Möglichkeit besteht in der Anordnung der Kraftmeßeinrichtung zwischen dem Betätigungselement und dem ihm zugeordneten Reibbelag oder zwischen dem Bremssattel und dem durch die Wirkung der vom Bremssattel aufgebrachten Reaktionskraft betätigbaren Reibbelag.

Zur Konkretisierung des Erfindungsgedankens ist vorgesehen, daß das Untersetzungsgetriebe eine Gewindemutter aufweist, an der die Kraftmeßeinrichtung angeordnet ist.

Bei einer vorteilhaften Weiterbildung des Erfindungsgegenstandes erfolgt die Kraftübertragung zwischen dem Untersetzungsgetriebe und dem Reibbelag mittels einer Druckstange, an der die Kraftmeßeinrichtung angeordnet ist.

Dabei ist es besonders sinnvoll, wenn die Kraftmeßeinrichtung durch ein mindestens einen Dehnungsmeßstreifen aufweisendes Kraftmeßelement gebildet ist oder als eine Kraftmeßdose ausgebildet ist.

Weitere vorteilhafte Ausführungen der Erfindung sind den Unteransprüchen 9 bis 11 sowie 13 bis 19 zu entnehmen.

Eine andere vorteilhafte Ausführung der Erfindung sieht vor, daß die Kraftmeßeinrichtung am Ende der Spindel angeordnet ist, vorzugsweise in einem dem eine durchgehende Bohrung der Spindel verschließenden Boden ausgebildet ist.

Eine besonders kompakt bauende Ausführungsvariante des Erfindungsgegenstandes sieht vor, daß die Kraftmeßeinrichtung durch Bereiche des Bodens geringerer Materialstärke gebildet ist, die mit Dehnungsmeßstreifen zur Auswertung deren Verformung zusammenwirken.
Die Erfindung wird in der nachfolgenden Beschreibung von drei Ausführungsbeispielen unter Bezugnahme auf die beiliegende Zeichnung näher erläutert.
In der Zeichnung zeigt:
- Fig. 1: eine erste Ausführung der erfindungsgemäßen, elektromechanisch betätigbaren Scheibenbremse im Axialschnitt;
- Fig. 2: eine zweite Ausführung des Erfindungsgegenstands in einer der Fig. 1 entsprechenden Darstellung; und
- Fig. 3: eine dritte Ausführung der erfindungsgemäßen elektromechanischen Scheibenbremse in einer der Fig. 1 entsprechenden Darstellung.

Die in der Zeichnung dargestellte, elektromechanisch betätigbare Scheibenbremse nach der Erfindung, die im gezeigten Beispiel als eine Schwimmsattel-Scheibenbremse ausgebildet ist, besteht im wesentlichen aus einem in einem nicht gezeigten feststehenden Halter verschiebbar gelagerten Bremssattel 1 sowie einer Betätigungseinheit 2, deren Gehäuse 8 mittels nicht gezeigter Befestigungselemente am Bremssattel 1 angeordnet ist. Ein Paar von Reibbelägen 4 und 5 ist im Bremssattel 1 derart angeordnet, daß sie der linken und der rechten Seitenfläche einer Bremsscheibe 3 zugewandt sind.

Nachstehend wird der in der Zeichnung rechts gezeigte Reibbelag 4 als erster Reibbelag und der andere, mit 5 bezeichnete Reibbelag als zweiter Reibbelag bezeichnet.

Während der erste Reibbelag 4 mittels eines Betätigungselements 30 durch die Betätigungseinheit 2 direkt mit der Bremsscheibe 3 in Eingriff bringbar ist, wird der zweite Reibbelag 5 durch die Wirkung einer bei der Betätigung der Anordnung vom Bremssattel 1 aufgebrachten Reaktionskraft gegen die gegenüberliegende Seitenfläche der Bremsscheibe 3 gedrückt.

Die vorhin erwähnte Betätigungseinheit 2 besteht aus einem Elektromotor 6, der im dargestellten Beispiel als ein permanentmagnet-erregter, elektronisch kommutierbarer (Torque-) Motor, dessen Stator 9 unbeweglich im Gehäuse 8 angeordnet ist und dessen Rotor 10 bzw. Hohlwelle durch einen ringförmigen Träger 28 gebildet ist, der mehrere Permanentmagnetsegmente 29 trägt. Zwischen dem Torque-Motor 6 und dem vorhin erwähnten, vorzugsweise koaxial zum Motor 6 angeordneten Betätigungselement 30 ist wirkungsmäßig ein Untersetzungsgetriebe 7 angeordnet, das im gezeigten Beispiel als ein Rollengewindetrieb 11 bis 14 ausgebildet ist. Der Rollengewindetrieb besteht dabei aus einer Gewindemutter 11 sowie einer eine durchgehende Bohrung 35 aufweisenden Gewindespindel 14, wobei in der Gewindemutter 11 achsparallel Gewinderollen 12,13 angeordnet sind, die bei einer Rotationsbewegung der Gewindemutter 11 sich ohne axiale Verschiebung planetenartig drehen und die Gewindespindel 14 in eine axiale Bewegung versetzen. Für eine radiale Führung der Gewinderollen 12,13 sorgen zwei an deren Enden angeordnete, nicht gezeigte Führungsscheiben und Zahnkränze.

Die Anordnung ist dabei vorzugsweise derart getroffen, daß der Rotor 10 des Torque-Motors 6 drehfest mit der Gewindemutter 11 verbunden ist, während die Gewindespindel 14 das vorhin erwähnte Betätigungselement 30 bildet, das unter Zwischenschaltung einer Kraftübertragungsplatte 24 den ersten Reibbelag 4 betätigt. Die Übertragung von Druckkräften zwischen der Gewindespindel 14 und der Kraftübertragungsplatte 24 erfolgt dabei vorzugsweise mittels einer teilweise innerhalb der Gewindespindel 14 angeordneten Druckstange 41, die in zwei Kugelkalotten 42,43 gelagert ist. Die erste Kugelkalotte 42 ist dabei etwa in der Mitte der axialen Länge der Gewindespindel 14, also innerhalb des zwischen den Gewinderollen 12,13 liegenden Bereichs, angeordnet, während die zweite, dem Reibbelag 4 näher liegende Kugelkalotte 43 in einem axialen Fortsatz 44 der Kraftübertragungsplatte 24 ausgebildet ist. Außerdem ist zwischen der Kraftübertragungsplatte 24 bzw. ihrem Fortsatz 44 und der Gewindespindel 14 ein metallischer Faltenbalg 45 vorgesehen bzw. mit beiden Teilen verschweißt, der eine torosionsfeste Verbindung zur Übertragung von aus der von der Gewindespindel 14 aufgebrachten Zuspannkraft resultierenden Torsionsmomenten bildet. Durch diese Maßnahmen werden bei der Verwendung des Rollengewindetriebs auftretende Wirkungsgradverluste minimiert, die auf die starke Reibung zurückzuführen sind, die durch die auf den Rollengewindetrieb wirkenden Momente verursacht wird.

Außerdem ist zwischen der Kraftübertragungsplatte 24 und dem ersten Reibbelag 4 vorzugsweise eine Verdrehsicherung 25 vorgesehen, die durch einen im Reibbelag 4 eingepreßten Stift gebildet ist, der von einer in der Kraftübertragungsplatte 24 ausgebildeten Ausnehmung aufgenommen wird.

Der Führung sowohl des Untersetzungsgetriebes 7 als auch der Hohlwelle bzw. des Rotors 10 dient ein am Bremssattel 1 sich abstützendes Radiallager 16, das aus einem mit dem Bremssattel 1 zusammenwirkenden Lageraußenring 18, einem durch den Umfangsbereich einer kragenförmigen radialen Erweiterung 15 der Gewindemutter 11 gebildeten Lagerinnenring 17 sowie mehreren, zwischen den beiden Lagerringen 17,18 angeordneten Kugeln 19 besteht. Durch die einteilige Ausführung des Innenlagerringes mit der Gewindemutter 11 werden sowohl eine höhere Laufgenauigkeit als auch ein verringerter Montageaufwand erzielt, sowie eine Modulbauweise ermöglicht.

Um den Rollengewindetrieb 7 exakt positionieren sowie Steuersignale für die elektronische Kommutierung des Torque-Motors 6 gewinnen zu können, ist im Gehäuse 8 der Betätigungseinheit 2 ein kontaktloser Meßwert- bzw. Winkelgeber, ein sogenannter Resolver 20, vorgesehen. Im dargestellten Beispiel besteht der Resolver 20 aus zwei koaxial zueinander,sa durch einen Luftspalt voneinander getrennten Ringen 21,22, die elektrische Wicklungen tragen. Der radial innenliegende Ring 21 ist dabei mit dem Rotor 10 verbunden, während der andere, radial äußere Ring 22 drehfest im Gehäuse 8 angeordnet ist. Der Innenraum des Gehäuses 8 wird einerseits durch einen im Bereich des Resolvers 20 am Gehäuse 8 angebrachten Deckel 31 und andererseits durch eine elastische, membranartige Dichtung 27 vor Verunreinigungen, beispielsweise Spritzwasser, geschützt. Die Dichtung 27 ist dabei vorzugsweise zwischen der Kraftübertragungsplatte 24 und einem am Lageraußenring 18 axial anliegenden Haltering 32 eingespannt.

Um schließlich die im Betrieb des Torque-Motors 6 entstehende Wärme wirksam an die Umgebung weiterleiten zu können, ist das Gehäuse 8 mit großflächigen Kühlrippen 33 versehen.

Zur gleichmäßigen Einleitung der Betätigungskräfte in die Reibbeläge 4,5 muß der Bremssattel 1 massiv ausgelegt sein. Damit weniger Biegemomente von den Reibbellägen 4,5 in das Gehäuse 8 der Betätigungseinheit 2 eingeleitet werden können, ist es sinnvoll, den Bremssattel 1 als Rahmensattel auszubilden. Dadurch werden in das Gehäuse lediglich Zugkräfte eingeleitet, so daß die Lagerung der Betätigungseinheit 2 nicht durch innere Biegespannungen im Lagersitz belastet wird.

Eine Reduzierung des erforderlichen Motormoments wird durch zweckmäßige Integration eines Planetengetriebes 46,47,48,49,50 erreicht. Das Planetengetriebe, das wirkungsmäßig zwischen dem Rotor 10 und der Gewindemutter 11 angeordnet ist, besteht aus einem Sonnenrad 46, das vorzugsweise durch einen am Rotor 10 ausgebildeten, außen verzahnten Bereich 55 gebildet ist, mehreren Planetenrädern, von denen eines dargestellt und mit den Bezugszeichen 47 versehen sind, sowie einem Hohlrad 49, das durch einen im Bremssattel 1 angeordneten, mit einer Innenverzahnung 50 gebildet ist. Die Lagerung des Rotors auf der Gewindemutter 11 erfolgt mittels einer Kombination eines schematisch angedeuteten Nadellagers 51 sowie eines Kugellagers 52, dessen radial außenliegende Laufbahn 53 im Rotor 10 ausgebildet ist, während dessen radial innenliegende Laufbahn 54 auf der Gewindemutter 11 ausgeformt ist. Durch diese Maßnahmen wird erreicht, daß eine größere Steigung des Spindelgewindes mit höherem Wirkungsgrad gewählt werden kann.

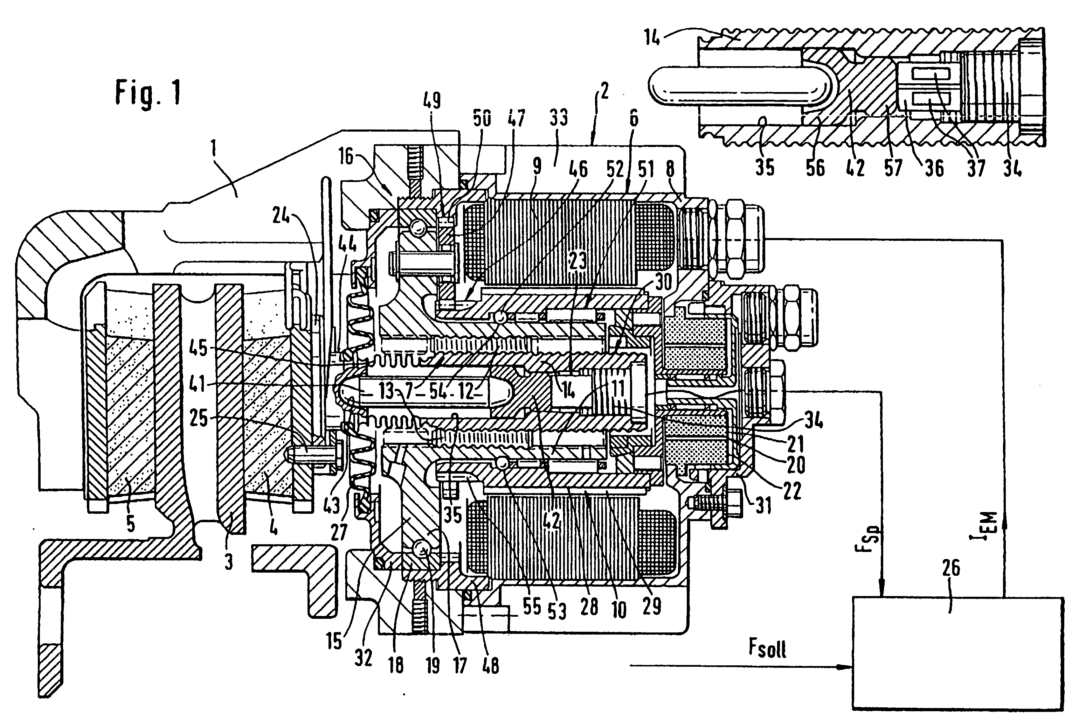

Um die erfindungsgemäße, elektromechanisch betätigbare Scheibenbremse in einem Regelkreis verwenden zu können, der beim Einsatz der erwähnten Bremsen in einem Kraftfahrzeug erforderlich ist, ist eine Kraftmeßeinrichtung 23 vorgesehen, deren Signale F_{Sp} einer lediglich schematisch dargestellten elektronischen Regelschaltung 26 zugeführt werden. Die Regelschaltung 26, der außerdem ein vom Fahrzeugfahrer vorgegebener Bremskraftsollwert Fₛₒₗₗ zugeführt wird, erzeugt Ansteuersignale I_{EM} für den Elektromotor 6. Die Kraftmeßeinrichtung 23 ist bei dem in Fig. 1 gezeigten Ausführungsbeispiel durch ein mit vier Dehnungsmeßstreifen 37 versehenes Kraftmeßelement 34 gebildet, das als ein die vorhin erwähnte Bohrung 35 verschließender Gewindebolzen ausgeführt ist. Durch diese Befestigungsart kann die Meßeinrichtung 23 bzw. 34 einfach ausgetauscht werden.

Wie aus der Zeichnung weiter ersichtlich, ist die Bohrung 35 vorzugsweise als Stufenbohrung ausgebildet, wobei die erste Kugelkalotte 42 zwei Abschnitte 56, 57 aufweist, deren Durchmesser denen der Stufenbohrung entsprechen, so daß eine einwandfreie Führung der Kugelkalotte 42 innerhalb der Gewindespindel 14 gewähleistet ist. An dem ersten Abschnitt 56 größeren Durchmessers stützt sich dabei die vorhin erwähnte Druckstange 41 ab, während der zweite Abschnitt 57 kleineren Durchmessers in kraftübertragender Verbindung mit einem axialen Fortsatz 36 des Gewindebolzens 34 steht bzw. an seinem vorzugsweise kugelabschnittförmig gestalteten Ende axial anliegt. Die lediglich schematisch angedeuteten Dehnungsmeßstreifen 37 sind in einer Wheatstonebrücke verschaltet. Hierbei sind zwei gegenüberliegende Dehnungsmeßstreifen zur Normalkraftmessung in dem Gewindebolzen angeordnet, während die anderen beiden der Temperaturkompensation dienen. Durch die Verschaltung der Dehnungsmeßstreifen als Wheatstonebrücke kann der Einfluß der während Bremsungen entstehenden, hohen Temperaturen (bis 250 °C) auf die einzelnen Dehnungsmeßstreifen kompensiert werden. Denkbar ist jedoch auch eine andere Schaltung, bei der die vier Dehnungsmeßstreifen als zwei Paare in zwei Wheatstonebrücken verschaltet werden, wobei die beiden redundanten Brücken zur Fehlererkennung an der Kraftmeßeinrichtung geeignet sind und eine Rekonfiguration durch Plausibilitätsprüfung möglich ist. Außerdem ist auch eine Kraftmessung durch Bestimmung der Veränderung der spannungsabhängigen magnetischen Permeabilität (magnetostriktiver Effekt) möglich. Durch die Verwendung der erfindungsgemäß gestalteten Kugelkalotte 42 wird erreicht, daß die auf die Kugelkalotte 42 wirkende Normalkraft und die Querkraft getrennt werden und der Querkraftanteil seitlich in die Gewindespindel 14 abgeleitet wird, so daß keine Verfälschung des Meßergebnisses erfolgt.

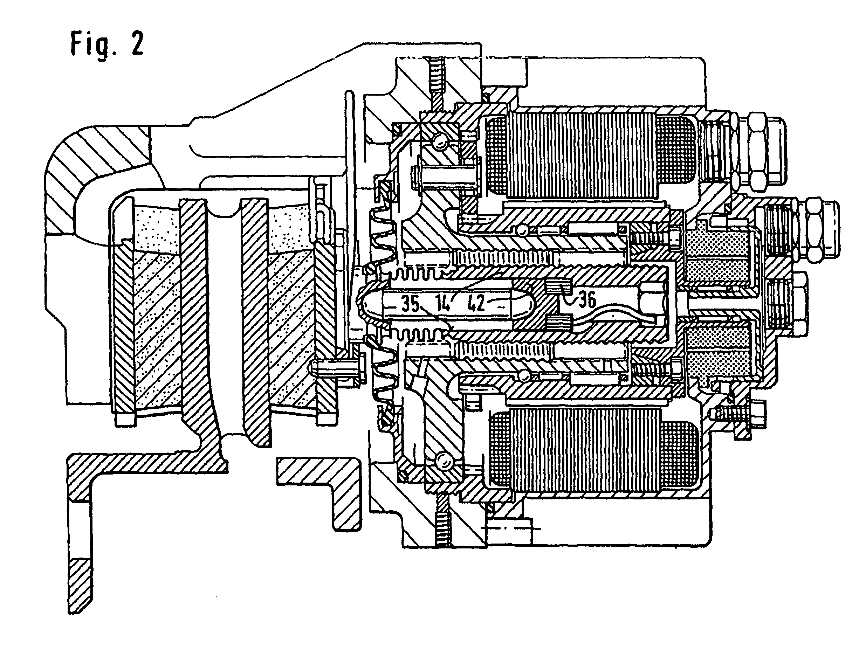

Bei der in Fig. 2 gezeigten Ausführung des Erfindungsgegenstandes ist die vorhin erwähnte Kraftmeßeinrichtung als eine Kraftmeßdose 36 ausgeführt. Die Kraftmeßdose 36 ist dabei vorzugsweise innerhalb der Bohrung 35 der Gewindespindel 14 so angeordnet, daß sie bei der Betätigung der erfindungsgemäßen Scheibenbremse die von der Gewindespindel 14 aufgebrachte Spannkraft auf die Kugelkalotte 42 überträgt und dadurch deren Ermittlung ermöglicht.

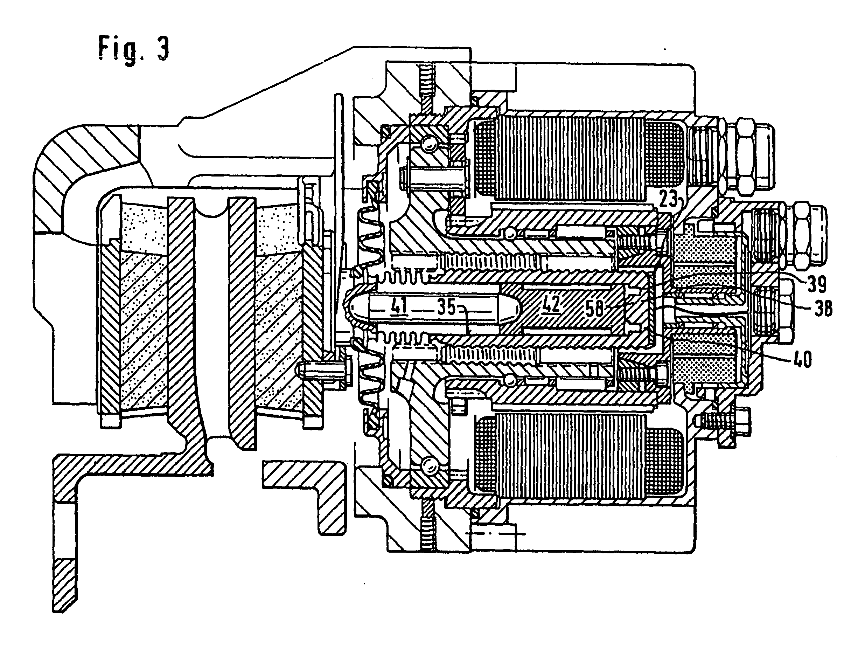

Bei der in Fig. 3 dargestellten Ausführung der Erfindung ist die Kraftmeßeinrichtung 23 im Bereich eines die Spindelbohrung 35 verschließenden Bodens 38 ausgebildet. Zu diesem Zweck sind im Boden 38 Bereiche 39, 40 geringerer Materialstärke ausgeführt, während in der Mitte ein Kraftilbertragungselement 58 vorgesehen ist. An dem Kraftübertragungselement 58 liegt das vorhin erwähnte Druckstück 42 axial an, so daß bei der Betätigung der Druckstange 41 die Bereiche 39, 40 verformt werden. Die Erfassung der Materialverformung kann z. B. mit nicht gezeigten Dehnungsmeßstreifen erfolgen, die auf der dem Druckstück 42 abgewandten Seite des Bodens 38 aufgeklebt sind.

### Bezugszeichenliste

- 1: Bremssattel
- 2: Betätigungseinheit
- 3: Bremsscheibe
- 4: Reibbelag
- 5: Reibbelag
- 6: Elektromotor
- 7: Untersetzungsgetriebe
- 8: Gehäuse
- 9: Stator
- 10: Rotor
- 11: Gewindemutter
- 12: Gewinderolle
- 13: Gewinderolle
- 14: Spindel
- 15: Erweiterung
- 16: Radiallager
- 17: Lagerinnenring
- 18: Lageraußenring
- 19: Zylinderrolle
- 20: Resolver
- 21: Ring
- 22: Ring
- 23: Kraftmeßeinrichtung
- 24: Kraftübertragungsplatte
- 25: Verdrehsicherung
- 26: Regelschaltung
- 27: Dichtung
- 28: Träger
- 29: Permanentmagnetsegment
- 30: Betätigungselement
- 31: Deckel
- 32: Haltering
- 33: Kühlrippe
- 34: Kraftmeßelement
- 35: Bohrung
- 36: Kraftmeßdose
- 37: Dehnungsmeßstreifen
- 38: Boden
- 39: Bereich
- 40: Bereich
- 41: Druckstange
- 42: Kugelkalotte
- 43: Kugelkalotte
- 44: Fortsatz
- 45: Faltenbalg
- 46: Sonnenrad
- 47: Planetenrad
- 48: Ring
- 49: Hohlrad
- 50: Innenverzahnung
- 51: Nadellager
- 52: Kugellager
- 53: Laufbahn
- 54: Laufbahn
- 55: Bereich
- 56: Abschnitt
- 57: Abschnitt
- 58: Kraftübertragungselement

## Patentansprüche

1. Elektromechanisch betätigbare Scheibenbremse für Kraftfahrzeuge mit einem Bremssattel (1), sowie einer am Bremssattel (1) angeordneten Betätigungseinheit (2), mit zwei mit je einer Seitenfläche einer Bremsscheibe (3) zusammenwirkenden, im Bremssattel (1) begrenzt verschiebbar angeordneten Reibbelägen (4, 5), wobei einer der Reibbeläge (4, 5) mittels eines Betätigungselementes (30) durch die Betätigungseinheit (2) direkt und der andere Reibbelag (4, 5) durch die Wirkung einer vom Bremssattel (1) aufgebrachten Reaktionskraft mit der Bremsscheibe (3) in Eingriff bringbar ist, und wobei die Betätigungseinheit (2) einen koaxial zum Betätigungselement angeordneten Elektromotor (6) sowie ein wirkungsmäßig zwischen ihm und dem Betätigungselement angeordnetes Untersetzungsgetriebe (7) aufweist, **dadurch gekennzeichnet, daß** im Kraftfluß zwischen dem Sattel (1) und der Betätigungseinheit (2) eine Kraftmeßeinrichtung (23) angeordnet ist, welche die in der Axialrichtung der Betätigungseinheit wirkenden Kräfte ermittelt und deren Ausgangssignale einer Regelschaltung (26) zuführbar sind, die den dem Elektromotor (6) zugeführten Strom und/oder die Spannung beeinflusst.

2. Elektromechanisch betätigbare Scheibenbremse nach Anspruch 1, **dadurch gekennzeichnet, daß** die Kraftmeßeinrichtung im Sattel angeordnet ist.

3. Elektromechanisch betätigbare Scheibenbremse nach Anspruch 1, **dadurch gekennzeichnet, daß** die Kraftmeßeinrichtung in oder an einem Lager (16) angeordnet ist, das die von der Betätigungseinheit (2) aufgebrachte Kraft aufnimmt und in dem das Untersetzungsgetriebe (7) gelagert ist.

4. Elektromechanisch betätigbare Scheibenbremse nach Anspruch 1, **dadurch gekennzeichnet, daß** die KraftMeßeinrichtung (23) zwischen dem Betätigungselement (30) und dem ihm zugeordneten Reibbelag (4) angeordnet ist.

5. Elektromechanisch betätigbare Scheibenbremse nach Anspruch 1, **dadurch gekennzeichnet, daß** die Kraftmeßeinrichtung zwischen dem Bremssattel und dem durch die Wirkung der vom Bremssattel aufgebrachten Reaktionskraft betätigbaren Reibbelag angeordnet ist.

6. Elektromechanisch betätigbare Scheibenbremse nach Anspruch 1, **dadurch gekennzeichnet, daß** das Untersetzungsgetriebe eine Gewindemutter aufweist, an der die Kraftmeßeinrichtung angeordnet ist.

7. Elektromechanisch betätigbare Scheibenbremse nach Anspruch 4, **dadurch gekennzeichnet, daß** die Kraftübertragung zwischen dem Untersetzungsgetriebe (7) und dem Reibbelag (4) mittels einer Druckstange (41) erfolgt und daß die Kraftmeßeinrichtung an der Druckstange angeordnet ist.

8. Elektromechanisch betätigbare Scheibenbremse nach einem der vorhergehenden Ansprüche, **dadurch gekennzeichnet, daß** die Kraftmeßeinrichtung (23) durch ein mindestens einen Dehnungsmeßstreifen (37) aufweisendes Kraftmeßelement (34) gebildet ist.

9. Elektromechanisch betätigbare Scheibenbremse nach einem der vorhergehenden Ansprüche 1 bis 7, **dadurch gekennzeichnet, daß** die Kraftmeßeinrichtung durch ein mit magnetostriktivem Effekt arbeitendes Kraftmeßelement gebildet ist.

10. Elektromechanisch betätigbare Scheibenbremse nach einem der vorhergehenden Ansprüche 1 bis 7, **dadurch gekennzeichnet, daß** die Kraftmeßeinrichtung durch ein mit piezoelektrischem Effekt arbeitendes Kraftmeßelement gebildet ist.

11. Elektromechanisch betätigbare Scheibenbremse nach einem der vorhergehenden Ansprüche 1 bis 7, **dadurch gekennzeichnet, daß** die Kraftmeßeinrichtung durch ein mit kapazitivem Effekt arbeitendes Kraftmeßelement gebildet ist.

12. Elektromechanisch betätigbare Scheibenbremse nach einem der vorhergehenden Ansprüche 1 bis 7, **dadurch gekennzeichnet, daß** die Kraftmeßeinrichtung (23) als eine Kraftmeßdose (36) ausgebildet ist.

13. Elektromechanisch betätigbare Scheibenbremse nach einem der vorhergehenden Ansprüche, **dadurch gekennzeichnet, daß** das Untersetzungsgetriebe (7) als ein Rollengewindetrieb (11-14) ausgebildet ist, dessen Spindel (14) das Betätigungselement (30) bildet und den Reibbelag (4) mittels einer Druckstange (41) betätigt, die in einem in der Spindel (14) verschiebbar angeordneten Druckstück (Kugelkalotte 42) gelagert ist, das mit dem Kraftmeß-einrichtung (23) in kraftübertragender Verbindung steht.

14. Elektromechanisch betätigbare Scheibenbremse nach Anspruch 13, **dadurch gekennzeichnet, daß** die Spindel eine Bohrung aufweist, in der das Druckstück verschiebbar geführt ist und an deren Ende das Kraftmeßelement angeordnet ist.

15. Elektromechanisch betätigbare Scheibenbremse nach Anspruch 13, **dadurch gekennzeichnet, daß** die Spindel (14) eine durchgehende Bohrung (35) aufweist, in der das Druckstück (42) verschiebbar geführt ist, wobei die Bohrung (35) durch das Kraftmeßelement (34) verschlossen wird.

16. Elektromechanisch betätigbare Scheibenbremse nach Anspruch 11, **dadurch gekennzeichnet, daß** die Bohrung (35) als Stufenbohrung ausgebildet ist und daß das Druckstück (42) zwei Abschnitte (56,57) unterschiedlicher Durchmesser aufweist, wobei die Druckstange (41) am Abschnitt (56) größeren Durchmessers abgestützt ist, während der Abschnitt (57) kleineren Durchmessers am Kraftmeßelement (34) anliegt.

17. Elektromechanisch betätigbare Scheibenbremse nach einem der vorhergehenden Ansprüche 8 und 13 bis 16, **dadurch gekennzeichnet, daß** das Kraftmeßelement (34) einen axialen Fortsatz (36) aufweist, der den bzw. die Dehnungsmeßstreifen (37) trägt und dessen Ende kugelabschnittförmig ausgebildet ist.

18. Elektromechanisch betätigbare Scheibenbremse nach Anspruch 9, **dadurch gekennzeichnet, daß** das Kraftmeßelement (34) einen axialen Fortsatz (36) aufweist, der mit Spulen zur Erfassung des magnetostriktiven Effektes versehen ist.

19. Elektromechanisch betätigbare Scheibenbremse nach einem der Ansprüche 8 bis 17, **dadurch gekennzeichnet, daß** die Dehnungsmeßstreifen in mindestens einer Wheatstone-Voll- oder -Halbbrücke verschaltet sind.

20. Elektromechanisch betätigbare Scheibenbremse nach Anspruch 9 **dadurch gekennzeichnet, daß** die Kraftmeßeinrichtung (23) am Ende der Spindel (14) angeordnet ist.

21. Elektromechanisch betätigbare Scheibenbremse nach Anspruch 20, **dadurch gekennzeichnet, daß** die Kraftmeßeinrichtung (23) in einem die Bohrung (35) der Spindel (14) verschließenden Boden (38) ausgebildet ist.

22. Elektromechanisch betätigbare Scheibenbremse nach Anspruch 21 **dadurch gekennzeichnet, daß** die Kraftmeßeinrichtung (23) durch Bereiche (39,40) geringerer Materialstärke gebildet ist, die mit Dehnungsmeßstreifen zur Auswertung deren Verformung zusammenwirken.

## Claims

1. Electromechanically operable disc brake for automotive vehicles which includes a brake caliper (1), as well as an actuating unit (2) arranged on the brake caliper (1), two friction linings (4, 5) which cooperate with each one lateral surface of a brake disc (3) and are arranged in the brake caliper (1) so as to be displaceable within limits, wherein one of the friction linings (4, 5) is directly movable into engagement with the brake disc (3) caused by the actuating unit (2) by way of an actuating element (30), and the other friction lining (4, 5) is movable into engagement with the brake disc (3) by the effect of a reaction force generated by the brake caliper (1), and wherein the actuating unit (2) includes an electric motor (6) that is arranged coaxially relative to the actuating element and a reduction gear (7) interposed between the motor and the actuating element in terms of effect,
**characterized in that** a force-measuring device (23) is interposed in the flux of force between the caliper (1) and the actuating unit (2) and detects the forces acting in the axial direction of the actuating unit, and the output signals of the force-measuring device are adapted to be sent to a control circuit (26) which influences the current supplied to the electric motor (6), and/or the voltage.

2. Electromechanically operable disc brake as claimed in claim 1,
**characterized in that** the force-measuring device is arranged in the caliper.

3. Electromechanically operable disc brake as claimed in claim 1,
**characterized in that** the force-measuring device is arranged in or on a bearing (16) which accommodates the force produced by the actuating unit (2) and in which the reduction gear (7) is mounted.

4. Electromechanically operable disc brake as claimed in claim 1,
**characterized in that** the force-measuring device (23) is arranged between the actuating element (30) and the friction lining (4) associated with it.

5. Electromechanically operable disc brake as claimed in claim 1,
**characterized in that** the force-measuring device is arranged between the brake caliper and the friction lining operable by the effect of the reaction force that is produced by the brake caliper.

6. Electromechanically operable disc brake as claimed in claim 1,
**characterized in that** the reduction gear has a threaded nut on which the force-measuring device is arranged.

7. Electromechanically operable disc brake as claimed in claim 4,
**characterized in that** the force is transmitted between the reduction gear (7) and the friction lining (4) by way of a push rod (41), and **in that** the force-measuring device is arranged on the push rod.

8. Electromechanically operable disc brake as claimed in any one of the preceding claims,
**characterized in that** the force-measuring device (23) is configured as a force-measuring element (34) which includes at least one wire strain gauge (37).

9. Electromechanically operable disc brake as claimed in any one of the preceding claims 1 to 7,
**characterized in that** the force-measuring device is configured as a force-measuring element operating with magnetostrictive effect.

10. Electromechanically operable disc brake as claimed in any one of the preceding claims 1 to 7,
**characterized in that** the force-measuring device is configured as a force-measuring element operating with piezoelectrical effect.

11. Electromechanically operable disc brake as claimed in any one of the preceding claims 1 to 7,
**characterized in that** the force-measuring device is configured as a force-measuring element operating with capacitive effect.

12. Electromechanically operable disc brake as claimed in any one of the preceding claims 1 to 7,
**characterized in that** the force-measuring device (23) is configured as a pressure gauge (36).

13. Electromechanically operable disc brake as claimed in any one of the preceding claims,
**characterized in that** the reduction gear (7) is configured as a roller-and-thread drive (11-14) having a spindle (14) which forms the actuating element (30) and actuates the friction lining (4) by way of a push rod (41) mounted in a pressure member (spherical segment 42), which latter is slidable in the spindle (14) and in a force-transmitting connection with the force-measuring device (23).

14. Electromechanically operable disc brake as claimed in claim 13,
**characterized in that** the spindle includes a bore in which the pressure member is slidably guided and on the end of which the force-measuring element is arranged.

15. Electromechanically operable disc brake as claimed in claim 13,
**characterized in that** the spindle (14) has a through-bore (35) in which the pressure member (42) is slidably guided, and the bore (35) is closed by the force-measuring element (34).

16. Electromechanically operable disc brake as claimed in claim 11,
**characterized in that** the bore (35) is configured as a stepped bore, and **in that** the pressure member (42) comprises two portions (56, 57) of different diameters, and the push rod (41) is supported on the portion (56) of large diameter, and the portion (57) of smaller diameter bears against the force-measuring element (34).

17. Electromechanically operable disc brake as claimed in any one of the preceding claims 8 and 13 to 16,
**characterized in that** the force-measuring element (34) has an axial extension (36) which carries the wire strain gauge (s) (37) and the end of which has a calotte-type design.

18. Electromechanically operable disc brake as claimed in claim 9,
**characterized in that** the force-measuring element (34) has an axial extension (36) which is equipped with coils for establishing the magnetostrictive effect.

19. Electromechanically operable disc brake as claimed in any one of claims 8 to 17,
**characterized in that** the wire strain gauges are connected in at least one full or semi Wheatstone bridge.

20. Electromechanically operable disc brake as claimed in claim 9,
**characterized in that** the force-measuring device (23) is arranged at the end of the spindle (14).

21. Electromechanically operable disc brake as claimed in claim 20,
**characterized in that** the force-measuring device (23) is provided in a bottom (38) which closes the bore (35) of the spindle (14).

22. Electromechanically operable disc brake as claimed in claim 21,
**characterized in that** the force-measuring device (23) is provided by areas (39, 40) having a reduced material thickness which cooperate with wire strain gauges to evaluate their deformation.

## Revendications

1. Frein à disque à commande électromécanique pour véhicules automobiles, comportant un étrier de frein (1) ainsi qu'une unité d'actionnement (2) disposée sur l'étrier de frein (1), avec deux garnitures de friction (4,5) coopérant chacune avec une surface latérale d'un disque de frein (3), disposées dans l'étrier de frein (1) de façon à pouvoir se déplacer en translation de manière limitée, dans lequel l'une des garnitures de frein (4,5) peut être mise en prise directement avec le disque de frein au moyen d'un élément d'actionnement (30) par l'unité d'actionnement (2), et l'autre garniture de frein (4,5) peut être mise en prise avec le disque de frein (3) par l'action d'une force de réaction exercée sur l'étrier de frein, et dans lequel l'unité d'actionnement (2) comporte un moteur électrique (6) disposé coaxialement à l'élément d'actionnement, ainsi qu'un réducteur de vitesse (7), disposé fonctionnellement entre celui-ci et l'élément d'actionnement, **caractérisé en ce que**, dans le flux de force entre l'étrier (1) et l'unité d'actionnement (2), il est agencé un dispositif de mesure de force (23) qui détermine les forces agissant dans la direction axiale de l'unité d'actionnement, les signaux de sortie duquel pouvant être amenés à un circuit de réglage (26), qui influe sur le courant et/ou la tension alimentant le moteur électrique (6).

2. Frein à disque à commande électromécanique selon la revendication 1, **caractérisé en ce que** le dispositif de mesure de force est placé dans l'étrier.

3. Frein à disque à commande électromécanique selon la revendication 1, **caractérisé en ce que** le dispositif de mesure de force est disposé dans ou sur un palier (16), qui reçoit la force exercée par l'unité d'actionnement (2) et dans lequel le réducteur de vitesse (7) est monté.

4. Frein à disque à commande électromécanique selon la revendication 1, **caractérisé en ce que** le dispositif de mesure de force (23) est placé entre l'élément d'actionnement (30) et la garniture de friction (4) qui lui est associée.

5. Frein à disque à commande électromécanique selon la revendication 1, **caractérisé en ce que** le dispositif de mesure de force est disposé entre l'étrier de frein et la garniture de friction, qui peut être actionnée par l'effet de la force de réaction exercée par l'étrier de frein.

6. Frein à disque à commande électromécanique selon la revendication 1, **caractérisé en ce que** le réducteur de vitesse comporte un écrou taraudé sur lequel est placé le dispositif de mesure de force.

7. Frein à disque à commande électromécanique selon la revendication 4, **caractérisé en ce que** la transmission de force entre le réducteur de vitesse (7) et la garniture de friction (4) est effectuée a moyen d'une tige de compression (41), et **en ce que** le dispositif de mesure de force est placé sur la tige de compression.

8. Frein à disque à commande électromécanique selon l'une des revendications précédentes, **caractérisé en ce que** le dispositif de mesure de force (23) est formé par un élément de mesure de force (34) comportant au moins une bande de mesure d'allongement (37).

9. Frein à disque à commande électromécanique selon l'une des revendications précédentes 1 à 7, **caractérisé en ce que** le dispositif de mesure de force est formé par un élément de mesure de force travaillant par effet magnétostrictif.

10. Frein à disque à commande électromécanique selon l'une des revendications précédentes 1 à 7, **caractérisé en ce que** le dispositif de mesure de force est formé par un élément de mesure de force travaillant par effet piézoélectrique.

11. Frein à disque à commande électromécanique selon l'une quelconque des revendications précédentes 1 à 7, **caractérisé en ce que** le dispositif de mesure de force est formé par un élément de mesure de force travaillant par effet capacitif.

12. Frein à disque à commande électromécanique selon l'une des revendications précédentes 1 à 7, **caractérisé en ce que** le dispositif de mesure de force (23) est réalisé sous forme d'une boîte de mesure de force (36).

13. Frein à disque à commande électromécanique selon l'une des revendications précédentes, **caractérisé en ce que** le réducteur de vitesse (7) est constitué par un mouvement fileté à galets (11- 14), dont la broche (14) constitue l'élément d'actionnement (30) et actionne la garniture de friction (4) au moyen d'une tige de compression (41), qui est montée dans une pièce recevant la pression (calotte sphérique 42) disposée mobile en translation dans la broche (14), qui se tient en liaison de transmission de force avec le dispositif de mesure de force (23).

14. Frein à disque à commande électromécanique selon la revendication 13, **caractérisé en ce que** la broche comporte un alésage dans lequel la pièce recevant la pression est guidée en translation, et à l'extrémité de laquelle est disposé l'élément de mesure de force.

15. Frein à disque à commande électromécanique selon la revendication 13, **caractérisé en ce que** la broche (14) comporte un alésage traversant (35) dans lequel la pièce recevant la pression (42) est guidée en translation, l'alésage (35) étant obturé par l'élément de mesure de force (34).

16. Frein à disque à commande électromécanique selon la revendication 11, **caractérisé en ce que** l'alésage (35) est exécuté comme alésage à étages et **en ce que** la pièce recevant la pression (42) présente deux segments (56, 57) de diamètres différents, la tige de compression (41) étant en appui sur le segment (56) de plus grand diamètre tandis que le segment (57) de plus petit diamètre repose sur l'élément de mesure de force (34).

17. Frein à disque à commande électromécanique selon l'une des revendications précédentes 8 et 13 à 16, **caractérisé en ce que** l'élément de mesure de force (34) comporte un prolongement axial (36) qui porte la ou les bandes de mesure d'allongement (37), et dont l'extrémité est exécutée en forme de segment sphérique ;

18. Frein à disque à commande électromécanique selon la revendication 9, **caractérisé en ce que** l'élément de mesure de force (34) comporte un prolongement axial (36) qui est muni de bobines pour la saisie de l'effet magnétostrictif.

19. Frein à disque à commande électromécanique selon l'une des revendications 8 à 17, **caractérisé en ce que** les bandes de mesure d'allongement sont câblées en au moins un pont de Wheatstone complet ou un demi- pont de Wheatstone.

20. Frein à disque à commande électromécanique selon la revendication 9, **caractérisé en ce que** le dispositif de mesure de force (23) est placé à l'extrémité de la broche (14).

21. Frein à disque à commande électromécanique selon la revendication 20, **caractérisé en ce que** le dispositif de mesure de force (23) est réalisé dans un fond (38) obturant l'alésage (35) de la broche (14).

22. Frein à disque à commande électromécanique selon la revendication 21, **caractérisé en ce que** le dispositif de mesure de force (23) est formé par des zones (39, 40) d'épaisseur de matériau plus faible, qui coopèrent avec les bandes de mesure de l'allongement pour l'évaluation de leur déformation.
